# DEMANDE DE BREVET EUROPEEN

(11) **EP 2 151 951 A2**
(43) Date de publication de la demande: **10.02.2010**
(21) Numéro de dépôt: 09167168.5
(22) Date de dépôt: 04.08.2009
(51) Int. Cl.: H04L 12/24, H04L 12/56

(54) **Système de gestion de réseau, architecture inter-domaines et procédé pour la vérification de disponibilité de ressources**

(30) Priorité: 06.08.2008 FR 0855453
(71) Demandeur: Alcatel Lucent, 75008 Paris (FR)
(72) Inventeur: Pouylau, Hélia, 91620, Nozay (FR); Douville, Richard, 91620, Nozay (FR)
(74) Mandataire: Thibaud, Jean-Baptiste

(57) **Abrégé**

L'invention concerne un système de gestion de réseau, une architecture inter-domaines et un procédé pour vérifier la disponibilité de ressources et réserver un chemin pour la fourniture d'un service demandé par un utilisateur. Selon l'invention le système de gestion de chaque domaine de l'architecture inter-domaines est adapté
- à prédéterminer une pluralité de chemins internes entre des noeuds d'entrée (i1, i2) et de sortie (e1, e2, e3) du domaine (11) qu'il gère, supportant une classe de qualité de service ; et
- à publier, une information comportant les noeuds d'entrée et de sortie associés à chaque chemin prédéterminé pour la dite classe de qualité de service

de façon à ce que l'architecture soit en mesure de sélectionner, lors d'une demande de service spécifiée avec un niveau de qualité de service, des noeuds d'entrée et de sortie de chaque domaine par lesquels un chemin permettant de supporter le niveau de service peut être établi et que chaque domaine puisse vérifier la disponibilité et réserver virtuellement les ressources d'un chemin interne supportant le niveau de qualité de service entre les noeuds sélectionnés.

## Description

L'invention concerne le domaine des réseaux de communication, et plus particulièrement celui de la vérification de la disponibilité de ressources d'un réseau de communication nécessaires à la fourniture d'un service avec un certain niveau de qualité de service.

Lorsqu'un utilisateur désire accéder à un service tel qu'un service de vidéo à la demande ou de voix sur IP (Internet Protocol) fourni par l'intermédiaire d'un réseau de communication, il souhaite généralement obtenir ce service avec un niveau de qualité défini et garanti par l'opérateur de réseau. Le niveau de qualité de service et l'engagement de l'opérateur de garantir ce niveau sont généralement fixés par un contrat de qualité de service ou SLA (initiales anglo-saxonnes mises pour « Service Level Agreement ») établi entre l'utilisateur et l'opérateur.

Le niveau de service est spécifié dans le SLA au moyen d'une classe de qualité de service ou SLS (initiales anglo-saxonnes mises pour « Service Level Spécification ») comprenant des paramètres de performance technique tels que notamment la bande passante à réserver et le délai de transmission maximum autorisé. Ces paramètres de performance sont classiquement fonctions du type de service demandé. Lors de la négociation du contrat, l'opérateur doit être en mesure de s'assurer qu'il sera capable de fournir le service à l'utilisateur avec le niveau de qualité de service requis.

Pour l'opérateur, le processus de négociation consiste à vérifier si le réseau au moyen duquel doit être fourni le service possède au moins un ensemble de ressources disponibles qui, une fois réservées, permettront la réalisation du service avec le niveau de qualité de service défini à partir du SLS fixé dans le SLA. Nous entendons par ressources les différents noeuds du réseau et les liens entre ces noeuds. Chaque lien possède des caractéristiques techniques telles que le débit maximum de transmission qu'il peut supporter ou le délai de transmission nécessaire pour transmettre un paquet ou un signal du premier au second noeud qu'il relie.

Dans le cas où le dispositif, tel que le terminal de communication à partir duquel l'utilisateur désire obtenir un service, et où le dispositif tel que le serveur hébergeant le service, appartiennent au même réseau, la vérification de la disponibilité des ressources lors de la négociation peut être réalisée dans un temps satisfaisant.

Cette vérification rapide peut être effectuée notamment grâce à l'existence d'un partitionnement du réseau. Le partitionnement est rendu possible par le fait que les noeuds d'entrée et de sortie du réseau entre lesquels le service est à réaliser sont connus par avance par l'opérateur et ne varient pas d'une demande de service à une autre.

Cependant, avec la diversification des offres de service, le réseau sur lequel est connecté l'utilisateur n'est plus nécessairement le réseau du serveur hébergeant le service. Au contraire, les services sont obtenus en traversant des architectures inter-domaines comportant plusieurs réseaux appartenant souvent à des opérateurs différents dont les systèmes de gestion de réseau sont indépendants et entre lesquels des règles de confidentialité empêchent la publication d'informations critiques (ex : bande passante restante). Dans de tels cas, le processus de négociation doit permettre de déterminer, dans un temps satisfaisant, si chacun des réseaux de l'architecture inter-domaines potentiellement impliqué dans la réalisation du service dispose de ressources disponibles pour la réalisation du service avec le niveau de qualité de service spécifié par le SLS.

Plus précisément, le processus doit dans un premier temps être capable de déterminer les réseaux par lesquels le service peut être réalisé. Dans un deuxième temps, lorsque les réseaux appropriés sont sélectionnés, chaque réseau sélectionné doit être en mesure de vérifier la disponibilité des ressources au moment de la négociation du SLA.

Plusieurs vérifications doivent donc être réalisées, et plus le nombre de réseaux impliqués est grand, plus le temps de vérification est augmenté. De plus, pour chaque réseau de l'architecture, les noeuds d'entrée et de sortie entre lesquels le service est réalisé varient en fonction de la connexion de l'utilisateur et de la connexion du serveur hébergeant le service dans l'architecture. Par conséquent, un partitionnement des réseaux permettant une vérification rapide de la disponibilité des ressources n'est alors pas envisageable.

Pour essayer de déterminer une succession de réseaux susceptible de garantir le niveau de qualité de service avec lequel le service doit être fourni à l'utilisateur, le document intitulé « A Service Plane over the PCE Architecture for Automatic Multidomain Connection-Oriented Services », IEEE Communication Magazine, Juin 2008 présente une architecture inter-domaines constituée de plusieurs couches.

La figure 1, extraite de ce document, montre une telle architecture inter-domaines 100 composée de trois couches dénommées respectivement couche réseau 1, couche de gestion 2 et couche de service 3. La couche de réseau 1 se compose d'une pluralité de réseaux 11, 12, 13 interconnectés les uns avec les autres. Chaque réseau est muni d'un module de calcul de chemin 111a, 121a, 131a appelé PCE pour « Path Computation Element » pour établir un chemin dans chaque réseau. A titre illustratif, chaque réseau correspond ici à un système de routage autonome 111b, 121b, 131b appelé AS pour « Autonomous System ». Toutefois, dans d'autres modes de réalisation, plusieurs réseaux peuvent appartenir à un même système autonome.

La couche de gestion 2 comporte classiquement, pour chaque réseau, un système de gestion de réseau 112, 122, 132 ou NMS pour Network Management System. Chaque NMS 112, 122, 132 comporte l'inventaire des ressources du réseau 11, 12, 13 qu'il administre.

La couche de service 3 est partagée par l'ensemble des réseaux de l'architecture inter-domaines. Chaque opérateur d'un réseau constitutif de l'architecture est tenu de publier des performances techniques que son réseau est capable de réaliser au niveau d'un agent de service 113, 123, 133 ou SEA pour Service Element Agent. Chaque réseau 11, 12, 13 comprend son propre SEA.

Le document enseigne que, lors d'un processus de négociation, l'architecture est capable de sélectionner un enchaînement de réseaux supposés pouvoir réaliser le service demandé en satisfaisant le SLS en consultant des informations publiées sur la couche de service.

Cependant, une fois l'enchaînement de réseaux sélectionné, l'architecture présentée dans le document précédemment cité propose de vérifier la disponibilité des ressources nécessaires à la réalisation du service via les éléments PCEs de chaque domaine. Ceux-ci effectuent alors un calcul de chemin sous contraintes des paramètres de QoS spécifiés dans les SLS sélectionnés. Or ce calcul ne peut être effectué que lorsque chacun des PCEs possède d'importantes capacités de calcul. De plus, les algorithmes de recherche de chemins étant moins performants lorsque le nombre de contraintes de qualité de service est important, ce qui est particulièrement le cas dans une architecture inter-domaines, le temps nécessaire à la mise en oeuvre de ce calcul est considérablement augmenté.

D'autre part, une fois les ressources identifiées, une proposition commerciale doit être faite au client à l'origine de la requête. Dans l'attente de la réponse de ce dernier, il est souhaitable que les ressources nécessaires à la réalisation du service aient été réservées virtuellement -- c'est à dire au moins au niveau du plan de gestion du réseau -- de façon temporaire. Il est aussi souhaitable que les différents opérateurs impliqués dans la fourniture du service demandé soient en mesure, lors du processus de négociation, de garantir le niveau de qualité spécifié dans le SLA négocié par un opérateur vendeur du service au nom de chaque opérateur impliqué ou dans le SLA négocié avec chaque opérateur impliqué.

A défaut d'une telle garantie, il pourrait arriver, dans une telle architecture inter-domaines, qu'un client contracte un SLA lors de la demande d'accès à un service alors que les opérateurs des différents réseaux impliqués pour la fourniture du service ne sont pas en mesure d'assurer le niveau de service exigé par l'utilisateur au moment d'offrir le service.

Dans ce cas, le client ne pourra pas obtenir son service avec le niveau de qualité demandée. D'autre part, lorsqu'un opérateur ne peut pas garantir le niveau de qualité de service annoncé, il encourt des pénalités. Une telle situation, dommageable à la fois pour l'utilisateur et pour l'opérateur, doit donc être évitée.

La présente invention vise à garantir la réalisation d'un service avec un niveau de qualité de service requis par un utilisateur en permettant la vérification dans un délai raisonnable de la disponibilité des ressources ainsi que la réservation virtuelle de ces ressources dans chacun des réseaux d'une architecture inter-domaines lors d'un processus de négociation du SLA associé au service.

Dans ce but, un premier objet de l'invention concerne un système de gestion d'un réseau de communication susceptible de faire partie d'une architecture inter-domaines par l'intermédiaire de laquelle un service peut être fourni à un utilisateur, ledit réseau de communication comprenant des noeuds d'entrée et de sortie, le dit système de gestion de réseau étant **caractérisé en ce qu**'il est adapté à :
- recevoir, d'une couche de service, une classe de qualité de service comprenant des paramètres de performance ;
- déterminer par calcul en fonction desdits paramètres de performance une pluralité de chemins internes dudit réseau entre des noeuds d'entrée et de sortie permettant de supporter ladite classe de qualité de service ;
- stocker les chemins déterminés et la quantité de capacité de transmission utilisée sur chacun des chemins déterminés pour satisfaire ladite classe de service ; et
- autoriser, au niveau de la couche de service, la publication d'une information comportant les noeuds d'entrée et de sortie associés à chaque chemin interne déterminé pour ladite classe de qualité de service.

Un second objet de l'invention concerne une architecture inter-domaines par l'intermédiaire de laquelle un service peut être fourni à un utilisateur, ladite architecture comprenant une couche de service et une pluralité de domaines, chacun des domaines de ladite architecture étant un réseau de communication comprenant un système de gestion tel que définit dans le premier objet, **caractérisé en ce que** lorsqu'un utilisateur effectue une demande de service en spécifiant une classe de qualité de service nécessaire à sa réalisation, ladite architecture est adaptée à sélectionner des noeuds d'entrée et de sortie d'une succession de domaines par l'intermédiaire desquels le service doit être fourni en fonction de l'information publiée pour ladite classe de qualité de service au niveau de la couche de service par chacun des domaines de ladite architecture, et en ce que, chaque domaine pour lequel un noeud d'entrée et un noeud de sortie ont été sélectionnés est adapté à vérifier la disponibilité d'au moins un chemin interne au domaine entre ces deux noeuds parmi les chemins préalablement stockés dans le système de gestion dudit domaine pour ladite classe de qualité de service.

Avantageusement, lorsqu'un chemin interne est disponible pour chaque domaine pour lequel un noeud d'entrée et de sortie ont été sélectionné, l'architecture est adaptée à réserver un chemin de bout en bout de façon virtuelle et temporaire à partir de la quantité de capacité de transmission préalablement stockée pour chaque chemin interne disponible, ainsi qu'à établir le chemin de bout en bout de façon à fournir le service à l'utilisateur, ledit chemin de bout en bout étant composé d'un chemin interne disponible par domaine.

Un troisième objet de l'invention concerne un procédé pour la réservation virtuelle d'un chemin pour la fourniture d'un service demandé par un utilisateur dans une architecture inter-domaines, **caractérisé en ce qu**'il comporte au niveau du système de gestion de chaque domaine de ladite architecture et préalablement à toute demande de service, les étapes de :
- réception, d'au moins une classe de qualité de service comprenant des paramètres de performance ;
- détermination par calcul en fonction desdits paramètres de performance d'une pluralité de chemins internes dudit domaine entre des noeuds d'entrée et de sortie permettant de supporter ladite au moins une classe (10) de qualité de service ;
- stockage des chemins déterminés et de la quantité de capacité de transmission utilisée sur chacun des chemins déterminés pour satisfaire ladite classe de service ; et
- autorisation de publier, au niveau de la couche de service (3) de ladite architecture, une information comportant les noeuds d'entrée et de sortie associés à chaque chemin déterminé pour ladite au moins une classe de qualité de service ;
et en ce que, ledit service étant demandé avec une classe de qualité de service spécifiée par l'utilisateur, il comporte au niveau de ladite architecture, lors de la demande dudit service, les étapes de :
- vérification de la disponibilité d'un chemin de bout en bout permettant la réalisation dudit service avec la classe de qualité de service spécifiée par :
   o sélection de noeuds d'entrée et de sortie d'une succession de domaines par l'intermédiaire desquels le service doit être fourni en fonction de l'information publiée pour ladite classe de qualité de service spécifiée par chacun des domaines de ladite architecture, et
   o vérification, dans chaque domaine pour lequel un noeud d'entrée et un noeud de sortie ont été sélectionnés, de la disponibilité d'au moins un chemin interne au domaine entre ces deux noeuds parmi les chemins préalablement stockés pour ladite classe de qualité de service ; et
- lorsqu'un chemin interne est disponible pour chaque domaine (11, 12, 13, 14) pour lequel un noeud d'entrée et de sortie ont été sélectionnés, réservation virtuelle et temporaire d'un chemin de bout en bout pour la fourniture dudit service à partir de la quantité de capacité de transmission préalablement stockée pour chaque chemin interne disponible, ledit chemin de bout en bout étant composé d'un chemin interne disponible par domaine.

D'autres caractéristiques et avantages de l'invention apparaîtront à la lecture de la description qui va suivre en références aux dessins annexés dans lesquels :
- La figure 1, précédemment décrite, représente une architecture inter-domaines susceptible de fournir un service à un utilisateur par l'intermédiaire de plusieurs réseaux.
- La figure 2 représente les différents noeuds et liens d'un réseau, les caractéristiques des noeuds et des liens étant stockées dans un NMS conforme à l'invention.
- La figure 3 représente les différentes étapes mises en oeuvre pour la détermination de l'ensemble des chemins internes au réseau de la figure 2, potentiellement admissibles pour une classe de qualité de service.
- La figure 4 représente une table de publication comprenant des informations relatives à des classes de service publiées par un opérateur au niveau de la couche de service pour le réseau de la figure 2.
- La figure 5 représente l'établissement d'un chemin de bout en bout pour la fourniture d'un service par l'intermédiaire d'une architecture inter-domaines selon l'invention.

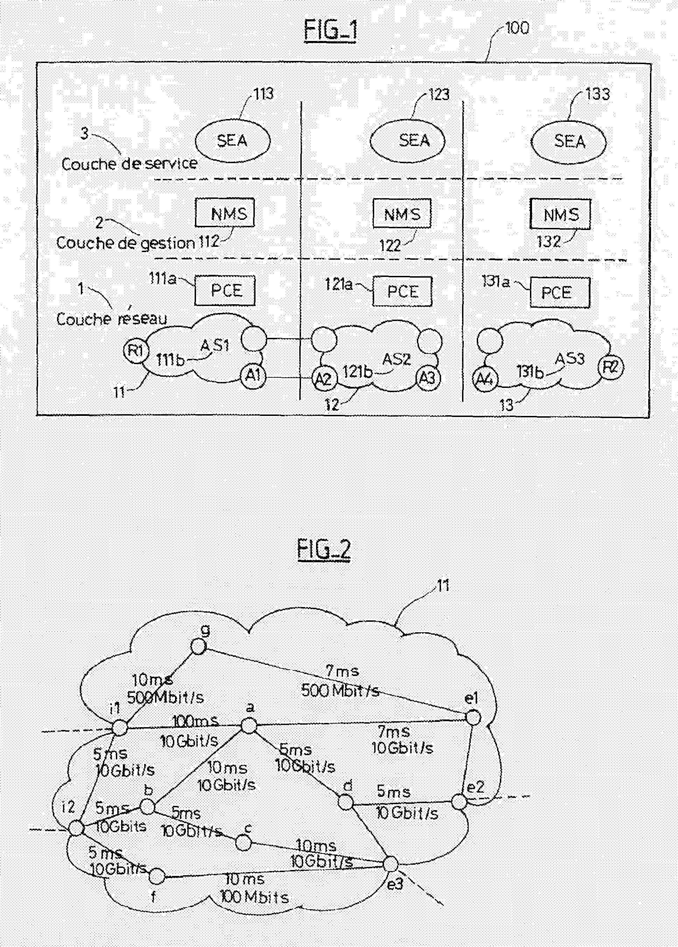

La figure 2 représente un réseau 11 de communication pouvant faire partie d'une architecture 100 telle que représentée sur la figure 1. Un tel réseau comprend un certain nombre de ressources, à savoir des noeuds et des liens par lesquels peuvent notamment transiter des paquets ou des signaux relatifs à un service. Ce réseau de communication peut être privé ou public et peut être notamment de type Internet/IP, ATM, Frame Relay, SDH et WDM.

Deux catégories de noeuds constitutifs d'un tel réseau peuvent être distinguées. La plupart des noeuds sont des noeuds appelés noeuds intermédiaires a, b, c, d, f, g qui sont reliés par l'intermédiaire de liens à d'autres noeuds du réseau. Certains noeuds, sont en revanche, connectés soit à un dispositif utilisateur susceptible de générer une requête de service soit à un serveur hébergeant un service, ou encore à un autre réseau lorsque le réseau fait partie d'une architecture inter-domaines. De tels noeuds sont appelés noeud d'entrée i1, i2 ou noeud de sortie e1, e2, e3 selon qu'ils reçoivent, respectivement émettent, des paquets ou des signaux depuis, respectivement vers, l'extérieur du réseau. Dans un mode de réalisation, chaque noeud de bordure du réseau est capable de remplir les fonctions de noeud d'entrée et de noeud de sortie pour différents flots de données.

Classiquement, un tel réseau 11 comprend également un système de gestion ou NMS 112 (figure 1) contenant l'inventaire des ressources du réseau. Plus précisément, le NMS est adapté à tenir à jour des bases de données telles que par exemple OSPTF-TE Link state database ou LSDB. Ces bases de données contiennent notamment l'identifiant de chaque noeud du réseau ainsi que la capacité et le temps de transmission permis par chacun des liens du réseau. Dans l'exemple représenté sur la figure 2, le NMS connaît l'identifiant des noeuds intermédiaires a, b, c, d, f, g, des noeuds d'entrée i1, i2 et des noeuds de sortie e1, e2, e3. Le NMS connaît également le délai et la capacité de transmission possible sur chacun des liens du réseau. Ainsi, le NMS sait, entre autre, qu'il est possible de transmettre une information depuis le noeud i1 au noeud a avec un débit maximal de 10 Gbit/s et que le temps nécessaire à cette transmission est de 5 ms.

Selon l'invention, le système de gestion 112 est adapté à recevoir, de la part d'une couche de service 3 un SLS comprenant des paramètres de performance. Pour chaque SLS reçu, le NMS 112 détermine, par calcul en fonction des paramètres de performance spécifiés dans le SLS, tous les chemins internes admissibles entre des noeuds d'entrée i1, i2 et de sortie e1, e2, e3 du réseau 11. Un chemin admissible est un chemin permettant de supporter les paramètres de performance d'un SLS. Une fois l'ensemble des chemins admissibles déterminé pour un SLS donné, le NMS 112 stocke l'ensemble des chemins trouvé et la quantité de capacité de transmission utilisée sur chacun des chemins trouvé pour satisfaire le SLS. Cette quantité de capacité de transmission peut être exprimée de manière relative, par exemple sous la forme d'un taux de bande passante utilisée, ou de manière absolue. Le NMS peut également autoriser la transmission des résultats à la couche de service 3 afin que celle-ci puisse publier une information composée du SLS et des noeuds d'entrée i1, i2 et de sortie e1, e2, e3 associés à chaque chemin déterminé.

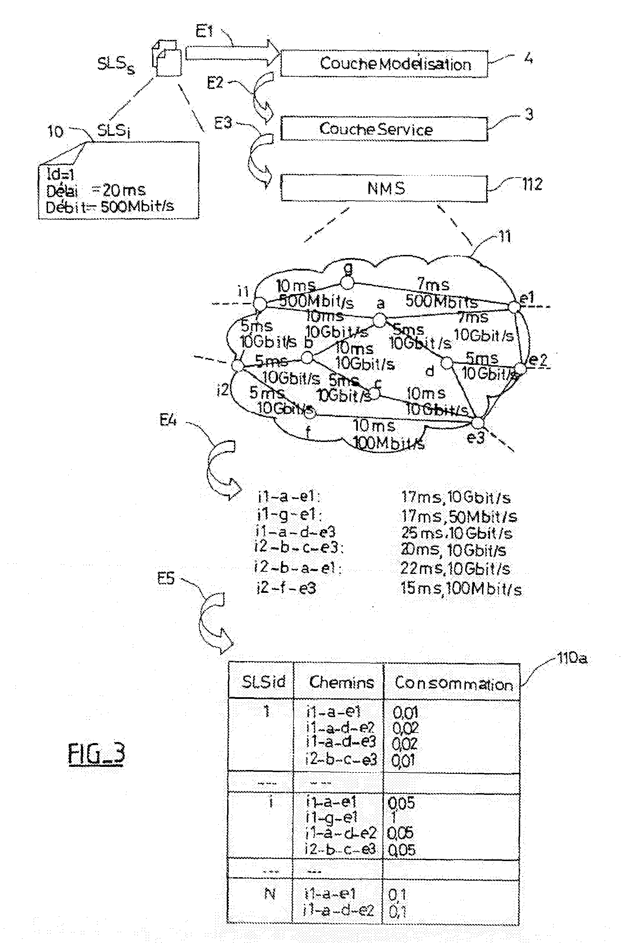

En référence aux figures 2 et 3, les différentes étapes mises en oeuvre au niveau de la couche de service 3 et du NMS 112 pour la détermination des chemins susceptibles de supporter un SLS ainsi que pour l'autorisation de la publication des noeuds d'entrée et de sorties des chemins déterminés vont être détaillées.

A partir de considérations commerciales, les opérateurs peuvent déterminer, a priori, les différents types de services qui seront susceptibles d'être fréquemment demandés par les utilisateurs. Ces considérations peuvent notamment consister en études statistiques sur les différentes habitudes des utilisateurs. Elles peuvent également être le résultat de nouvelles offres de service lancées par l'opérateur. La prise en compte de ces considérations permet classiquement, à chacun des opérateurs possédant un réseau dans l'architecture 100 inter-domaines, d'effectuer un dimensionnement approprié de son réseau.

Chaque opérateur peut également utiliser les résultats de ces considérations pour identifier un ensemble de SLS nécessaires à la bonne réalisation des services fréquemment demandés. Ces SLS, puisque nécessaires à la réalisation de nombreux services, apparaîtront vraisemblablement régulièrement dans les SLA lors des processus de négociation entre les différents utilisateurs et l'opérateur du réseau.

Selon l'invention, pour chaque SLS ainsi identifié, le NMS prédétermine, hors-ligne, les chemins internes entre les différents noeuds d'entrée et de sortie du réseau qu'il gère, capables de supporter un tel SLS. Nous entendons par hors-ligne le fait que les chemins admissibles sont prédéterminés alors qu'aucun trafic associé à un quelconque utilisateur ne transite dans le réseau à l'instant où la prédétermination est réalisée.

Comme le montre la figure 3, un administrateur du réseau peut créer (Etape E1 sur figure 3) une liste de SLS pour lesquels l'opérateur du réseau désire connaître par avance les différents chemins internes susceptibles de les supporter. Les chemins ainsi prédéterminés pour chaque SLS de la liste pourront alors être consultés par l'opérateur au moment où un utilisateur désirera contracter un SLA pour la réalisation d'un service nécessitant un tel SLS.

Une telle liste est avantageusement créée au niveau d'une couche de modélisation 4 encore appelée « Business layer » propre au réseau 11.

A chaque SLS de la liste est associée une représentation informatique 10 regroupant l'ensemble des paramètres de performance technique du SLS. Cet ensemble de paramètres de performance consiste en contraintes techniques qui, lorsqu'elles sont toutes vérifiées permettent la réalisation d'un service avec le niveau de qualité spécifié par le SLS.

Avantageusement, la représentation informatique 10 peut consister en une structure WSLA ou tout autre structure adaptée à la description de contrats de qualité de service (ex : structure UDDI, structure proposée par http://www3.tools.ietf.org/html/draft-tequila-sls-02, etc.). Dans un mode de réalisation, de telles structures sont représentées à l'aide du langage XML et sont spécifiquement conçues pour décrire des contraintes techniques associées à des ressources, y compris celles d'un réseau de communication. Comme le montre la figure 3, chaque SLS sera alors encodé sous la forme d'une structure en langage XML comprenant un identifiant permettant d'identifier le SLS et au moins une contrainte technique.

De façon avantageuse, la structure comprendra au moins une des contraintes techniques suivantes :
- Une largeur de bande passante représentant le débit de transmission minimal nécessaire à la bonne réalisation d'un service.
- Un délai de transmission. Ce délai représente le temps à ne pas dépasser pour la transmission d'un paquet ou d'un signal (en fonction du type de réseau de communication) pour traverser le réseau. En d'autres termes, il s'agit du temps de transmission maximal autorisé ente un noeud d'entrée i1, i2 et un noeud de sortie e1, e2, e3 du réseau dans le cas d'une transmission unidirectionnelle.
- Un taux d'erreur de transmission représentant le taux d'erreur maximal autorisé lors de la transmission d'un paquet ou d'un signal à travers le réseau.
- Une gigue maximale autorisée représentant la fluctuation maximale d'un signal entre un noeud d'entrée i1, i2 et un noeud de sortie e1, e2, e3.

Lorsqu'une nouvelle structure est créée pour un SLS, la couche de modélisation 4 du réseau 11 la transmet à une couche de service 3 du réseau 11 (Etape E2 sur figure 3). Cette couche de service 3 comporte notamment un gestionnaire de niveau de service OSS (initiales anglo-saxonnes mises pour « Operations System and Sofwares ») chargé d'administrer les services en accord avec la politique commerciale de l'opérateur et pouvant être utilisé lorsque le réseau fait partie d'une architecture inter-domaines telle que décrite en référence avec la figure 1.

Plus précisément, la structure est transmise à l'OSS (non représenté) qui est interfacé avec le NMS 112 du réseau 11. L'OSS effectue alors toutes les transformations nécessaires sur la structure décrivant le SLS afin que le NMS 112 puisse correctement l'interpréter (Etape E3 sur figure 3).

Lorsque le NMS 112 reçoit le SLS encodé, il extrait les paramètres de performance et détermine, conformément à l'invention, les chemins internes supportant les paramètres de performance contenus dans le SLS (Etape E4 sur figure 3). L'exemple non limitatif suivant a pour but d'illustrer la détermination des chemins internes en fonction des paramètres de performance et des différentes caractéristiques des noeuds et liens qui composent le réseau 11 de la figure 2.

Dans cet exemple, on considère que le NMS 112 gérant le réseau 11, reçoit un SLS comportant un premier paramètre de performance spécifiant que le délai de transmission doit être inférieur ou égal à 20 ms ; et un second paramètre spécifiant que la bande passante minimale doit être de 500 Mbit/s.

Le NMS 112 connaît, grâce aux informations contenues dans ses bases de données, la topologie exacte du réseau (noeuds intermédiaires et noeuds d'entrée ou de sortie) ainsi que le délai et la capacité de transmission de chacun des liens du réseau 11 tels que représentés sur la figure 2.

Pour un tel réseau 11, le NMS 112 détermine alors que quatre chemins internes permettent de supporter l'ensemble des paramètres de performance relatifs au SLS reçu. Un des chemins internes est le chemin constitué de la succession des noeuds i1-a-e1.

En effet, le délai de transmission pour transmettre une information entre le noeud i1 et le noeud a étant de 10 ms et le temps de transmission entre le noeud a et le noeud e1 étant de 7 ms, la contrainte de délai de transmission maximal du SLS est vérifiée. De plus, le débit autorisé par les liens entre respectivement les noeuds i1 et a et les noeuds a et e1 est de 10 Gbit/s, ce qui est suffisant pour satisfaire la contrainte de bande passante spécifiée dans le SLS. Les deux contraintes étant vérifiées, ce chemin permet la réalisation d'un service avec le niveau de qualité de service spécifié dans un tel SLS et est donc considéré comme admissible.

Les autres chemins internes possibles sont :
- i1-g-e1 ;
- i1-a-d-e2 ;
- i2-b-a-e1.

En revanche, le chemin i2-f-e3 n'est pas admissible car la capacité de transmission du lien reliant les noeuds f et e3 est insuffisante pour satisfaire le paramètre de performance de bande de base spécifié dans le SLS. De même, le chemin i1-a-d-e3 n'est pas admissible car le temps de transmission depuis le noeud d'entrée i1 jusqu'au noeud de sortie e3 est de 25 ms et donc dépasse le délai de transmission maximal indiqué dans le SLS.

Selon l'invention, le NMS 112 stocke l'ensemble des chemins admissibles pour le SLS (Etape E5 sur figure 3). Pour ce faire, le NMS 112 peut, par exemple, maintenir une table 110a de chemins dont la première colonne stocke des identifiants de SLS et la seconde colonne stocke des chemins admissibles. Chaque ligne de la table comporte :
- l'identifiant d'un SLS pour lequel le NMS a calculé des chemins admissibles ; et
- l'ensemble des chemins admissibles pour le SLS identifié.

Avantageusement, la table 110a peut comporter une troisième colonne pour stocker la quantité de capacité de transmission utilisée sur chacun des chemins admissibles pour satisfaire le SLS. Dans notre exemple, la quantité de capacité de transmission est stockée sous la forme d'un taux de bande passante utilisée pour satisfaire le SLS. D'après les informations sur la capacité des différents liens telles représentées sur la figure 2, le taux de bande passante utilisée est de 100% sur le chemin i1-g-e1 pour satisfaire le SLS soumis. L'opérateur du réseau sera alors en mesure de fournir, par l'intermédiaire de ce chemin, un seul service avec le niveau de service spécifié dans le SLS. Au contraire, le taux de bande passante utilisée n'est que de 5% sur le chemin i1-a-d-e2 et 20 services nécessitant un tel SLS pourront être fournis simultanément sur ce chemin.

Bien que dans le mode de réalisation précédemment illustré, la quantité de capacité de transmission est exprimée de manière relative sous la forme d'un taux, elle peut également être exprimée de manière absolue, dans toute unité universelle telle que notamment en Mb/s ou en Gb/s. L'unité utilisée peut avantageusement être une unité propre à une technologie de transmission particulière telle que par exemple, un nombre de canaux de longueur d'onde dans une technologie WDM (Wavelength Division Multiplexing), un nombre d'intervalles temporels dans une technologie TDM (Time Division Multiplexing) ou tout autre unité spécifiquement adaptée à la technologie du réseau dans lequel les chemins internes sont déterminés.

A chaque fois qu'un opérateur soumet, par l'intermédiaire des couches de modélisation 4 et de service 3 un nouvel SLS au NMS 112, une nouvelle ligne est ajoutée à la table 110a. Dans la mesure où certains services ne sont plus offerts par des fournisseurs de service, l'opérateur peut ne plus être intéressé par un SLS. La ligne relative au SLS désuet peut alors être supprimée de la table 110a. De façon similaire, lorsque l'opérateur désire modifier, supprimer ou rajouter un paramètre de performance contenu dans un SLS, le NMS 112 est en mesure de recalculer et de stocker dans la table 110a, l'ensemble des chemins admissibles pour le SLS modifié.

Conformément à l'invention, le NMS 112 autorise la publication partielle des chemins déterminés au niveau de la couche de service 3.

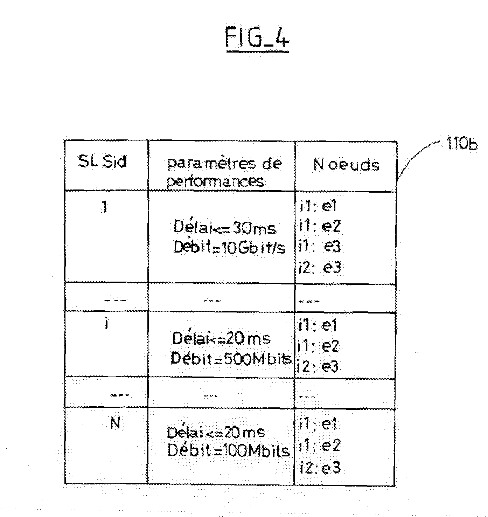

Dans le cas où le réseau fait partie d'une architecture inter-domaines et ou chaque domaine possède au niveau de la couche de service 3, un agent inter-domaine lié à l'OSS (initiales anglo-saxonnes mises pour « Opérations System and Sofware ») pour la communication inter-domaine, le NMS 112 peut transmettre à l'OSS, pour chaque SLS, les paires de noeuds d'entrée et de sortie de chacun des chemins admissibles pour ce SLS. L'OSS conserve alors ces données, par exemple sous la forme d'une table 110b de performance telle que représentée à la figure 4.

Les données contenues dans cette table 110b pourront être consultées par l'architecture afin qu'elle soit en mesure de déterminer, à tout instant, les noeuds d'entrée et de sortie du réseau par lesquels un chemin permettant de supporter un SLS peut être établi.

L'OSS peut également transmettre ces données vers un service d'annuaire 200 tel que l'UDDI (initiales anglo-saxonnes mises pour «Universal Description Discovery and Intégration »). Cet annuaire 200 pourra être consulté par la couche de service 3 d'une architecture inter-domaines notamment lorsqu'une demande de service lui sera adressée par un utilisateur.

Dans la mesure où les informations publiées au niveau de la couche de service sont partagées par l'ensemble des réseaux constitutifs de l'architecture inter-domaines, le fait que seuls les noeuds d'entrée et de sortie soient publiés permet de préserver un certain degré de confidentialité à chaque opérateur ayant un réseau dans l'architecture. L'opérateur indique en effet la possibilité d'effectuer un service avec un SLS à travers son réseau en précisant les points d'entrée et de sortie adéquates mais ne dévoilent pas pour autant l'intégralité de son architecture.

Comme précédemment mentionné, le fait que le NMS 112 soit capable dans un premier temps, de précalculer des chemins supportant un SLS et autorise, dans un second temps, la publication des noeuds d'entrée et de sortie des chemins précalculés, est particulièrement avantageux lorsque le réseau fait partie d'une architecture inter-domaines.

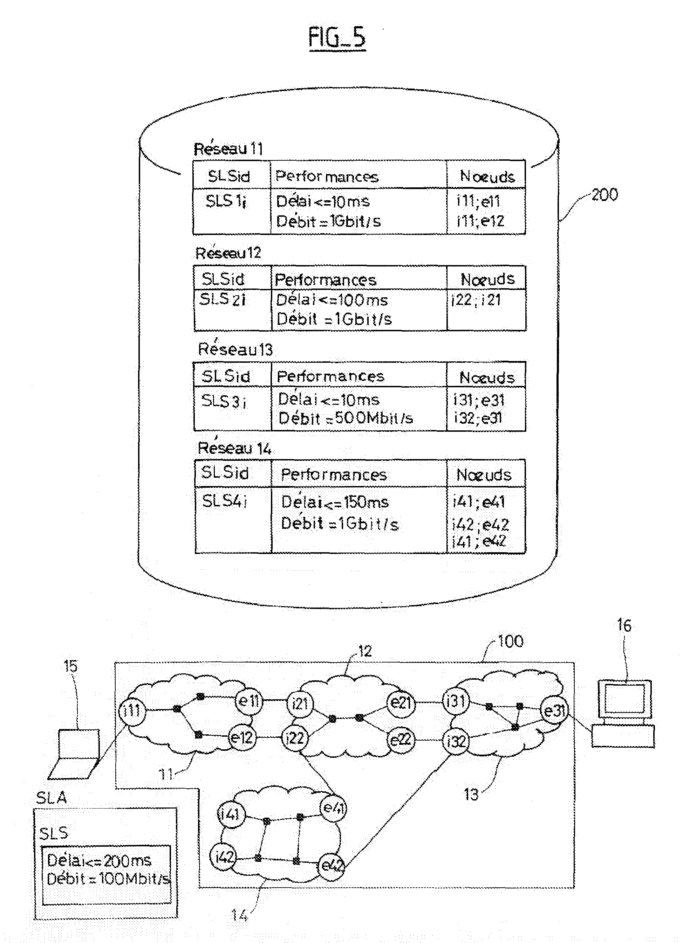

En référence à la figure 5, les différentes étapes mises en oeuvre lors de la réservation et de l'établissement d'un chemin de bout en bout pour la fourniture d'un service par l'intermédiaire d'une architecture inter-domaines dont chaque domaine comporte un NMS tel que précédemment décrit, vont être détaillés. L'architecture inter-domaines comporte quatre domaines 11, 12, 13, 14 et est identique à l'architecture représentée à la figure 1 en ce qu'elle comporte également une couche réseau 1, une couche de gestion 2 et une couche de service 3.

Comme décrit sur la figure 5, un utilisateur désire accéder à un service depuis un premier dispositif 15 utilisateur connecté à un premier réseau 11 de l'architecture 100. Le service est hébergé par un serveur 16 connecté à un second réseau 13 de l'architecture 100. Lors de sa demande de service, l'utilisateur a spécifié dans le SLS présent dans son SLA qu'il nécessitait une bande passante de 100 Mbit/s et un délai total maximum de transmission de 200 ms.

Lorsqu'une telle demande est effectuée, la couche de service 3 de l'architecture 100 peut alors consulter un annuaire 200 centralisé tel que l'UDDI préalablement rempli avec les informations publiées par chacun des réseaux 11, 12, 13, 14 constituant l'architecture 100. La couche de service 3 peut également consulter les informations directement dans chaque OSS de chaque réseau.

Dans cet exemple, préalablement à la demande de service, le NMS associé au réseau 11 a autorisé la publication, au niveau de l'UDDI 200, d'une table de performance contant une information relative au SLS1i. Cette information indique à la couche de service 3 de l'architecture 100, que le NMS du réseau 11 a déterminé, hors-ligne, que le réseau 11 est capable de transmettre un débit de 1 Gbit/s dans un délai de transmission inférieur à 10 ms entre ses noeuds d'entrée i11 et de sortie e11 ou entre ses noeuds d'entrée i11 et de sortie e12.

De même, les NMS associés respectivement aux réseaux 12, 13 et 14 ont autorisé, au niveau de l'UDDI 200, la publication des informations SLS2i, SLS3i et SLS4i précisant respectivement que :
- le réseau 12 est capable de transmettre un débit de 1 Gbit/s en 100 ms entre ses noeuds d'entrée i22 et de sortie e21 ;
- le réseau 13 est capable de transmettre un débit de 500 Mbit/s en 10 ms entre ses noeuds d'entrée i31 et de sortie e31 ou entre ses noeuds d'entrée i32 et de sortie e31;
- le réseau 14 est capable de transmettre un débit de 1 Gbit/s en 150 ms entre ses noeuds d'entrée i41 et de sortie e41, ou entre ses noeuds d'entrée i42 et de sortie e42, ou encore entre ses noeuds d'entrée i41 et de sortie e42.

Grâce aux informations contenues dans l'UDDI 200 tel que représenté dans la figure 5, la couche de service de l'architecture peut déterminer deux successions de réseaux susceptibles de fournir le service à l'utilisateur. Notamment, l'architecture 100 peut envisager de fournir le service à l'utilisateur en passant par les réseaux 11, 12 et 13. Une autre solution envisageable est la succession des réseaux 11, 14 et 13.

En effet, d'après les informations associées aux SLSi1, SLSi2 et SLSi3, il semble possible de fournir un service avec un débit de 500 Mbit/s (débit maximal indiqué dans le SLSi3) entre les noeuds i11 et e31 en passant successivement par les réseaux 11, 12 et 13 dans un délai de transmission de 120 ms (délai de transmission des réseaux 11, 12 et 13 cumulés). L'architecture peut donc envisager de fournir, par l'intermédiaire de ces trois réseaux 11, 12, 13, le service demandé par l'utilisateur dont le SLS précisait les contraintes de débits de 100 Mbit/s et de délai de 200 ms. On considère alors que la combinaison des SLSi1, SLSi2 et SLSi3 satisfont le SLS spécifié par l'utilisateur.

De même il semble possible de fournir un service avec un débit de 1 Gbit/s entre les noeuds i11 et e31 en passant successivement par les réseaux 11, 14, 13 dans un délai de transmission de 180 ms (délai de transmission des réseaux 11, 14 et 13 cumulés). L'architecture peut donc également envisager de fournir le service demandé par l'utilisateur dont le SLS par l'intermédiaire de ces trois réseaux 11, 14, 13.

De plus, conformément à l'invention, la couche de service 3 peut précisément sélectionner des noeuds d'entrée et de sortie pour chaque réseau 11, 12, 13, 14 de la succession de réseaux avec lesquels elle envisage de fournir le service. Nous considérons dans notre exemple que grâce aux tables de performances stockées dans l'UDDI 200, la couche de service 3 a sélectionné la succession des réseaux 11, 14 et 13 et plus précisément les paires de noeuds (i11 ; e12), (i41 ; e42) et (i32, e31).

La couche de service transmet alors au NMS de chaque réseau pour lequel un noeud d'entrée et un noeud de sortie ont été sélectionnés, une requête de vérification de la disponibilité d'un chemin interne au réseau entre ces deux noeuds permettant de satisfaire les SLSi1, SLSi4 et SLSi3 qui, en combinaison, satisfont le SLS spécifié par l'utilisateur. Dans notre exemple, les NMS des réseaux 11, 13 et 14 doivent donc respectivement vérifier :
- la disponibilité d'un chemin interne entre les noeuds i11 et e12 satisfaisant le SLS1i ;
- la disponibilité d'un chemin interne entre les noeuds i31 et e31 satisfaisant le SLS3i ;
- la disponibilité d'un chemin interne entre les noeuds i41 et e42 satisfaisant le SLS4i ;

Sur réception d'une telle requête, les NMS des réseaux concernés consultent alors respectivement leur table de chemin préalablement remplie. A partir de cette consultation, les NMS vérifient la disponibilité d'au moins un chemin entre ces noeuds parmi les chemins préalablement calculés et stockés pour le SLS indiqué. Une telle vérification est aisée et rapide car les chemins ont été précalculés.

Ainsi, chaque opérateur dont le réseau a été sélectionné, car susceptible d'être utilisé pour fournir du service à l'utilisateur, peut rapidement vérifier la disponibilité effective des ressources nécessaires à la réalisation du service dans le réseau dont il a la gestion. En outre, la troisième colonne de la table 110a (figure 3) permet au NMS de connaître la consommation des ressources qu'engendrera la connexion. Il peut donc décrémenter la capacité restante sur chaque lien de façon à réserver virtuellement la bande passante requise sur chacune des ressources composant un chemin, dans le but d'éviter un conflit ultérieur avec d'autres demandes reçues simultanément.

Chaque NMS ayant reçu une requête envoie une réponse à la couche de service 3. La réponse indique la présence ou non d'un chemin interne disponible entre les noeuds d'entrée et de service sélectionnés pour fournir le service.

Si un chemin interne est disponible dans chaque réseau 11, 13, 14 pour lequel un noeud d'entrée et de sortie ont été sélectionnés, la couche de service 3 de l'architecture 100 indique à l'utilisateur qu'elle peut garantir la fourniture du service avec le niveau de qualité spécifié. Elle propose également un prix pour la connexion. Si l'utilisateur accepte cette proposition commerciale, les SLA de chaque domaine sont contractés auprès des couches de service 3 des architectures de chaque domaine. Cette dernière enregistre la réservation virtuelle précédemment effectuée comme étant permanente et demande à la couche réseau 2 de réserver effectivement les ressources correspondant au SLA contracté. Cette réservation réelle exécutée par la couche 2, à travers des mécanismes protocolaires tels que RSVP-TE ou CR-LDP, correspond à la mise en oeuvre de configurations sur les différents équipements (routeurs) du chemin réalisant le SLA contracté. En d'autres termes il s'agit d'une réservation dans le plan de données.

Si l'un des NMS indique qu'aucun chemin interne n'est disponible dans le réseau qu'il gère, la couche de service peut, en fonction des informations publiées dans l'UDDI 200, sélectionner une seconde succession de noeuds d'entrée et de sortie. Ce processus peut être exécuté en boucle jusqu'à ce que chaque NMS indique qu'un chemin interne est disponible.

Si aucune succession de noeuds d'entrée et de sortie ne permet d'avoir un chemin interne disponible dans chaque réseau, la couche de service indique qu'elle n'est pas en mesure de garantir le service avec le niveau de qualité désiré. Elle peut préciser le nom de l'opérateur dont le réseau par l'intermédiaire duquel le service doit nécessairement être fourni, n'est pas en mesure de garantir le niveau de service spécifié dans le SLA.

## Revendications

1. Système de gestion (112) d'un réseau de communication (11) susceptible de faire partie d'une architecture (100) inter-domaines par l'intermédiaire de laquelle un service peut être fourni à un utilisateur, ladite architecture (100) inter-domaines comportant une pluralité de réseaux (11-14) constituant des domaines et une couche de service (3) partagée par ladite pluralité de réseaux, ledit réseau de communication comprenant des noeuds d'entrée (il, i2) et de sortie (e1, e2, e3), le dit système de gestion de réseau étant **caractérisé en ce qu'**il est adapté à :
- recevoir, de ladite couche de service (3), une classe (10) de qualité de service comprenant des paramètres de performance ;
- déterminer par calcul en fonction desdits paramètres de performance une pluralité de chemins internes dudit réseau entre des noeuds d'entrée (il, i2) et de sortie (e1, e2, e3) permettant de supporter ladite classe (10) de qualité de service ;
- stocker les chemins déterminés et la quantité de capacité de transmission utilisée sur chacun des chemins déterminés pour satisfaire ladite classe de service ; et
- autoriser, au niveau de la couche de service (3), la publication (110b) d'une information comportant les noeuds d'entrée (il, i2) et de sortie (e1, e2, e3) associés à chaque chemin interne déterminé pour ladite classe de qualité de service.

2. Système de gestion (112) de réseau selon la revendication 1, **caractérisé en ce que** lesdits paramètres de performance comprennent une largeur de bande passante minimale disponible entre un noeud d'entrée (il, i2) et un noeud de sortie (e1, e2, e3) dudit réseau.

3. Système de gestion (112) de réseau selon l'une quelconque des revendications 1 et 2, **caractérisé en ce que** lesdits paramètres de performance comprennent un délai de transmission maximal entre un noeud d'entrée (il, i2) et un noeud de sortie (e1, e2, e3) dudit réseau.

4. Système de gestion (112) de réseau selon l'une quelconque des revendications 1 à 3, **caractérisé en ce que** lesdits paramètres de performance comprennent en outre un taux d'erreur de transmission maximal entre un noeud d'entrée (il, i2) et un noeud de sortie (e1, e2, e3) dudit réseau.

5. Système de gestion (112) de réseau selon l'une quelconque des revendications 1 à 4, **caractérisé en ce que** lesdits paramètres de performance comprennent en outre une gigue maximale autorisée entre un noeud d'entrée (il, i2) et un noeud de sortie (e1, e2, e3) dudit réseau.

6. Architecture (100) inter-domaines par l'intermédiaire de laquelle un service peut être fourni à un utilisateur, ladite architecture (100) inter-domaines comportant une couche réseau (1) comprenant une pluralité de réseaux de communication (11-14) constituant les domaines, une couche de gestion (2) comprenant, pour chacun des réseaux, un système de gestion de réseau (112, 122, 132) selon la revendication 1, et une couche de service (3) partagée par ladite pluralité de réseaux, **caractérisée en ce que** lorsqu'un utilisateur effectue une demande de service en spécifiant une classe de qualité de service nécessaire à sa réalisation, ladite architecture (100) est adaptée à sélectionner des noeuds d'entrée et de sortie d'une succession de domaines (11, 12, 13, 14) par l'intermédiaire desquels le service doit être fourni en fonction de l'information publiée pour ladite classe de qualité de service au niveau de la couche de service (3) par chacun des domaines de ladite architecture, et
**en ce que**, chaque domaine (11, 12, 13, 14) pour lequel un noeud d'entrée et un noeud de sortie ont été sélectionnés est adapté à vérifier la disponibilité d'au moins un chemin interne au domaine entre ces deux noeuds parmi les chemins préalablement stockés dans le système de gestion dudit domaine pour ladite classe de qualité de service.

7. Architecture (100) inter-domaines selon la revendication 6, **caractérisée en ce que**, lorsqu'un chemin interne est disponible pour chaque domaine (11, 12, 13, 14) pour lequel un noeud d'entrée et de sortie ont été sélectionné, ladite architecture (100) est adaptée à réserver un chemin de bout en bout de façon virtuelle et temporaire à partir de la quantité de capacité de transmission préalablement stockée pour chaque chemin interne disponible, ainsi qu' à établir le chemin de bout en bout de façon à fournir le service à l'utilisateur, ledit chemin de bout en bout étant composé d'un chemin interne disponible par domaine (11, 12, 13, 14).

8. Architecture inter-domaines selon la revendication 7, **caractérisée en ce que** le système de gestion de chaque domaine de ladite succession de domaines est apte à décrémenter une capacité de transmission restante sur le chemin interne disponible dudit domaine pour réserver virtuellement ledit chemin de bout en bout.

9. Architecture inter-domaines selon la revendication 7 ou 8, **caractérisée en ce que** ladite architecture est apte à réserver effectivement les ressources correspondant à ladite classe de qualité de service par un mécanisme protocolaire RSVP-TE pour établir le chemin de bout en bout.

10. Procédé pour la réservation d'un chemin pour la fourniture d'un service demandé par un utilisateur dans une architecture (100) inter-domaines, **caractérisé en ce que** ladite architecture (100) inter-domaines comporte une couche réseau (1) comprenant une pluralité de réseaux (11-14) constituant les domaines, une couche de gestion (2) comprenant, pour chacun des réseaux, un système de gestion réseau (112, 122, 132), et une couche de service (3) partagée par ladite pluralité de réseaux, ledit procédé comportant, au niveau du système de gestion de chaque domaine (11, 12, 13, 14) de ladite architecture (100) et préalablement à toute demande de service, les étapes de :
- réception, d'au moins une classe (10) de qualité de service comprenant des paramètres de performance ;
- détermination par calcul en fonction desdits paramètres de performance d'une pluralité de chemins internes dudit domaine entre des noeuds d'entrée et de sortie permettant de supporter ladite au moins une classe (10) de qualité de service ;
- stockage des chemins déterminés et de la quantité de capacité de transmission utilisée sur chacun des chemins déterminés pour satisfaire ladite classe de service ; et
- autorisation de publier, au niveau de la couche de service (3) de ladite architecture (100), une information comportant les noeuds d'entrée et de sortie associés à chaque chemin déterminé pour ladite au moins une classe de qualité de service ;
et **en ce que**, ledit service étant demandé avec une classe de qualité de service spécifiée par l'utilisateur, il comporte au niveau de ladite architecture (100), lors de la demande dudit service, les étapes de :
- vérification de la disponibilité d'un chemin de bout en bout permettant la réalisation dudit service avec la classe de qualité de service spécifiée par :
i. sélection de noeuds d'entrée et de sortie d'une succession de domaines (11, 12, 13, 14) par l'intermédiaire desquels le service doit être fourni en fonction de l'information publiée pour ladite classe de qualité de service spécifiée par chacun des domaines de ladite architecture, et
ii. vérification, dans chaque domaine (11, 12, 13, 14) pour lequel un noeud d'entrée et un noeud de sortie ont été sélectionnés, de la disponibilité d'au moins un chemin interne au domaine entre ces deux noeuds parmi les chemins préalablement stockés pour ladite classe de qualité de service ; et
- lorsqu'un chemin interne est disponible pour chaque domaine (11, 12, 13, 14) pour lequel un noeud d'entrée et de sortie ont été sélectionnés, réservation virtuelle et temporaire d'un chemin de bout en bout pour la fourniture dudit service à partir de la quantité de capacité de transmission préalablement stockée pour chaque chemin interne disponible, ledit chemin de bout en bout étant composé d'un chemin interne disponible par domaine (11, 12, 13, 14).
